Europäisches Patentamt

European Patent Office

Office européen des brevets

(19)

(11) **EP 0 802 445 A1**

(12) **EUROPEAN PATENT APPLICATION**

(43) Date of publication:
22.10.1997 Bulletin 1997/43

(51) Int. Cl.⁶: $G02F\ 1/1333$

(21) Application number: 97103704.9

(22) Date of filing: 06.03.1997

(84) Designated Contracting States:
BE DE ES FR GB IT NL

(30) Priority: 19.04.1996 IT MI960754

(71) Applicant: Sniaricerche S.C.P.A.
I-75010 Pisticci Scalo (IT)

(72) Inventors:
• Hakemi, Ali Hassan
20035 Lissone (Milano) (IT)
• Santangelo, Michele
75019 Tricarico (Matera) (IT)
• Mashin, Alexander
603022 Nizhni Novgorod (RU)
• Golemme, Attilio
87030 Rende (Cosenza) (IT)
• De Filpo, Giovanni
87010 Doria-Cassano Ionio (Cosenza) (IT)
• Chidichimo, Giuseppe
87036 Arcavacata di Rende (Cosenza) (IT)

(74) Representative: Forattini, Amelia et al
c/o Internazionale Brevetti
Ingg. ZINI, MARANESI & C. S.r.l.
Piazza Castello 1
20121 Milano (IT)

(54) **PDLC film device with driving voltage selected for reduced off-axis haze**

(57) A method for achieving highly transparent PDLC films with reduced haze, based on the use of driving voltages whose form is such as to ensure a transmission of nonpolarized light which is practically constant for viewing angle ranges between zero and sixty degrees. In an example presented hereinafter, variation of optical transmission in the above viewing angle range is less than 5%, whilst transparency of the film in the "on" state reaches 80% of that of a conventional PDLC film produced with the same materials.

Fig.13

## Description

PDLC (Polymer Dispersed Liquid Crystal) films are composite materials constituted by microdroplets of a thermotropic liquid crystal dispersed in a polymeric matrix, which gives such films mechanical stability and adhesion properties, as taught by J.L. Fergason, US patent 4,435,047 (1984); J.W. Doane, G. Chidichimo, N.A.P. Vaz, US patent 4,688,900 (1987); Wu B.G., West J.L., Doane J.W., J Appln Phys, 62, 3925 (1987). These films can be used widely in technologies related to the control of the transmission of light through even large surfaces (light shutters, displays), as taught by J.W. Doane, N.A.P. Vaz, B.-G. Wu, S. Zumer, Appl Phys Lett, 48, 269 (1986); P.S. Drzaic, Appl Phys, 60, 2142 (1986); J.W. Doane, in "Liquid Crystals - Applications and Uses", published by B. Bahadur, vol. 1 (World Scientific Publishing), page 361 (1990).

The operating principle of PDLC films is based on the possibility of controlling the scattering of light incident thereon by virtue of electrical fields, as taught by S. Zumer and J.W. Doane, Phys Rev A, 34, 3373 (1986); S. Zumer, Phys Rev A, 37, 4006 (1988). This is a consequence of the anisotropic physical properties of liquid crystals, which arise from the fact that the molecules that compose them are not orientated randomly but have a preferred local orientation, as taught by P.G. de Gennes and J. Prost, "The Physics of Liquid Crystals", 2nd edition, Oxford Science Publications (1994); G. Vertogen and W.H. De Jeu, "Thermotropic Liquid Crystals, Fundamentals", Springer-Verlag (1988); L.M. Blinov and V.G. Chigrinov, "Electrooptic Effects in Liquid Crystal Materials", Springer-Verlag (1994). This orientation can be made to change as a consequence of the application of an electrical field. In the absence of electrical fields, the preferred molecular orientation is different in different points within a droplet and also differs in each droplet. Since the refractive index of the liquid crystal depends on its orientation, incident light, by passing from the polymer, which has a fixed refractive index, to the droplet, in which the index is different, is diffused and the PDLC film appears opaque. In the presence of an electrical field, the preferred molecular arrangement inside the various droplets assumes a common orientation, and if one carefully chooses the materials so that the involved component of the refractive index of the liquid crystal coincides with the component of the polymer, the material appears to be transparent because it is optically uniform. This perfect transparency, however, occurs only for one direction of incidence of the light, namely the one that coincides with the preferred orientation of the liquid crystal molecules; in the materials used most frequently, this is the direction at right angles to the plane of the film. For other directions of incidence, the light beam "reads" on the liquid crystal a refractive index which is no longer the same as that of the polymer and is accordingly scattered, causing the material to appear gradually more opaque as the viewing angle increases with respect to the direction at right angles to the plane of the film. This effect, which of course considerably limits the possibilities of application of PDLC films, is known as haze.

Haze is generally quantified by the forward scattering fraction which has a scattering angle of more than 2.5 or 3 degrees, depending on the standards, with an incident light which is normal with respect to the plane of the specimen.

Although this definition is appropriate for isotropic or in any case microscopically uniform substances, it is scarcely suitable for describing haze in the case of PDLCs, which are composite materials in which the optical properties of the liquid-crystal component vary according to the angle of incidence of the light. Since there is no standard for measuring haze in anisotropic and non-uniform materials such as PDLCs, haze can be evaluated by measuring it as in the standard but for angles of incidence other than 90 degrees with respect to the plane of the specimen, or by measuring transparency at different angles of incidence on the specimen. In fact, if transparency is constant, haze too is constant at different viewing angles and its effect can be reduced or eliminated for highly transmissive materials.

Generally, for angles of incidence of more than 30 degrees, transmission drops very quickly.

The aim of the present invention is therefore to overcome the above drawbacks.

An object is to reduce haze even for very different viewing angles.

Another object is to achieve this with simple methods and means.

This aim, these objects, and others are achieved by the PDLC film device according to the invention having reduced haze, which includes microdroplets of a thermotropic liquid crystal dispersed in a polymeric matrix, the microdroplets having an elongated shape and being all orientated in the same direction, the device including a means for generating an electrical field in which the frequency is between 10 and 1000 Hz and the voltage is between +500 and -500 V, and which is defined by the formula:

$$T(\theta) = \Sigma_i P_i T(\theta, V_i) = C$$

where C is a constant, $P_i$ are the weights of each transmission curve $T(\theta, V_i)$, $V_i$ are the voltages, $T(\theta)$ is the transmission, and $\theta$ is the angle of incidence.

In particular, the orientation direction is inclined by an angle $\alpha$ other than zero with respect to the plane of the film.

The invention furthermore relates to a method for preparing a PDLC film device with reduced haze, which includes microdroplets of a thermotropic liquid crystal dispersed in a polymeric matrix, the microdroplets having an elongated shape and being all orientated in the same direction, the device including a means for generating an electrical field whose frequency is between 10 and 1000 Hz and whose voltage is between +500 and -500 V, the method allowing to identify such voltage and including the following steps:

a) preparing experimental transmission curves for various voltages and various viewing angles,
b) setting initial time/voltage values which define a tentative pulse,
c) calculating average transmission,
d) calculating the difference between required transmission values and calculated values, and
e) verifying the acceptability of the difference.

The method preferably includes the following additional step:

f1) storing the wave form parameters if the verification yields a positive result.

Preferably, the method includes the following additional step:

f) changing the times/voltages if the verification yields a negative result.

The invention will become apparent with reference to the drawings enclosed by way of non-limitative example, wherein:

Figure 1 is a schematic view of the apparatus for measuring light transmission as a function of the angle of inclination of the specimen;

Figure 2 is a transverse sectional view of the device according to the invention;

Figures 3 to 11 are plots of transmission as a function of the viewing angle;

Figure 12 is a plot of a wave form of an electrical field according to the invention; and

Figure 13 is a block diagram of the method according to the invention.

It has been observed that in PDLC with uniformly stretched microdroplets, light transmission as a function of the viewing angle has a maximum value at an angle which depends on the intensity of the applied voltage (preferably simple sinusoidal voltages). One may designate this transmission by $T(\theta_i V_i)$, where the suffix i indicates that the measurements have been performed for a certain finite number of voltages. One obtains a transmission which is the weighted average of the transmissions measured, on condition that:

$$T(\theta) = \Sigma_i P_i T(\theta_i, V_i) = \text{constant}$$

where $P_i$ is the weight of each curve, that is to say, of each voltage which then becomes the time fraction, with respect to the total period, during which the voltage is

$V_i$. The final voltage is therefore $V_i$ for a time $t_1/t_i$, $V_2$ for a time $t_2/t_i$, and so forth, where $t_i$ is the period, whose associated frequency must be between approximately 10 and 1000 Hz in order to allow the human eye to average the various transmissions (the various curves) and allow the liquid crystal to orientate itself by following the voltage.

$T(\theta, V_i)$ are curves which we have determined experimentally. Assume that we have measured a reasonable number of such curves, say 10, each one for a different value $V_i$. We want the total transmission $T(\theta)$ to be equal to every $\theta$. In practice, it is possible to choose 10 angles between 0 and 60 and 70 degrees and set the following conditions:

$$\Sigma_i P_i T(\theta_i, V_i) = \text{constant}$$

$$\Sigma_i P_i T(\theta_2, V_i) = \text{constant}$$

$$\Sigma_i P_i T(\theta_{10}, V_i) = \text{constant}$$

with the same constant for each equation. We now have 10 equations and 10 unknowns, that is to say, the set of $P_i$, which can thus be determined. The total wave form shall therefore be given by the time sequence of $V_1$, for a time $t_1 = P_1/P_t$ $(P_t = \Sigma P_i)$, $V_2$ for a time $t_2$, and so forth up to $V_{10}$, after which the cycle begins again. The period $T = \Sigma t_i$ must be such that the frequency is between 10 and 1000 Hz. The resulting wave form is stepped, but can be smoothed by interpolating appropriately. The entire calculation process described above can be easily converted into a computing program based on the block diagram of Figure 13.

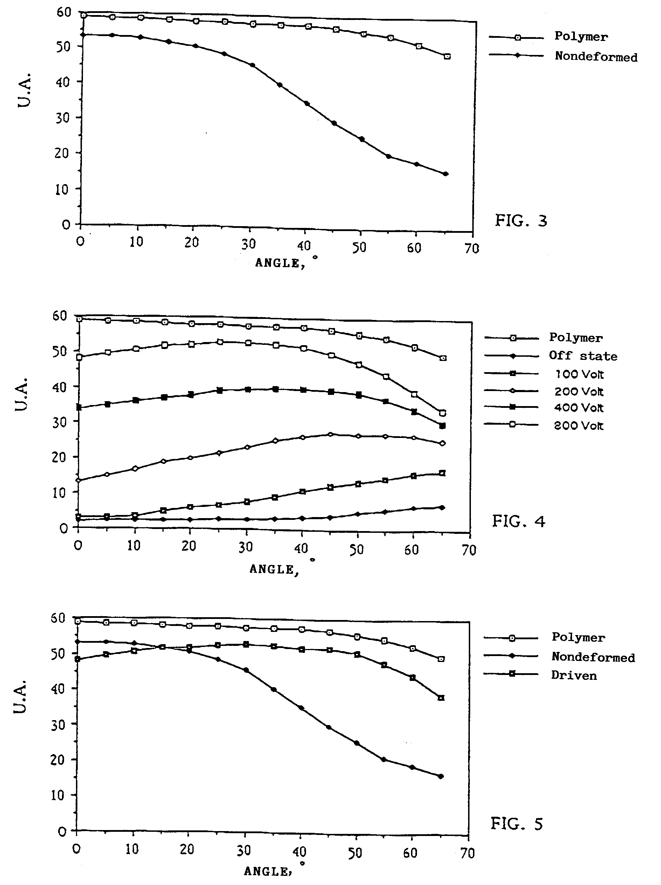

The method according to the invention uses on the one hand the possibility of deforming liquid crystal drops from the spherical shape to a slightly elongated one, with an identical elongation direction for all the droplets of a specimen, as illustrated in Figure 2, and on the other hand the possibility of using driving voltages having an appropriate form and intensity. The configuration illustrated in Figure 2 can be obtained by virtue of an appropriate hot shearing of the PDLC film. In particular, the PDLC film 1 contains the microdroplets 3 and is in turn contained between two conducting glass plates 2.

The theoretical basis for our method is the fact that the optical transmission of a PDLC film at the various angles depends on:

1) the refractive indices of the polymer and of the liquid crystal,
2) the angle $\alpha$, shown in Figure 2,
3) the type and intensity of the applied voltage.

The correct combination of all these factors allows to obtain PDLC films with low haze, as described hereinafter.

In particular, the method according to the invention is efficient in that it makes the haze of PDLC films constant without drastically sacrificing the overall optical transmission of the films. Figure 3 illustrates the typical variation of the light transmission of a normal PDLC between two conducting glass plates, when it is in the "on" state, that is to say, in the transparent state following the application of an electrical field, compared with the transmission of a film constituted by the polymer alone between two conducting glass plates (the characteristics of the materials used are described in example 1). It is evident that the light transmission of the PDLC decreases rapidly above 30 degrees.

The method according to the invention is based on observing the variation, as a function of the intensity of the applied electrical field, of the light transmission curve as a function of the angle of incidence of the light in films with droplets deformed as in Figure 2. Figure 4 illustrates the behavior of the light transmission of a deformed PDLC film ($\alpha$ = 30 degrees) for various values of the voltage of a sinusoidal electrical signal, with a frequency of 1 kHz, as the angle of incidence varies (the characteristics of the materials used are described in example 1). It can be seen that the transmission maximum shifts to different angles as the value of the applied voltage varies. This fact can be utilized for our purposes, and by appropriately "shaping" the wave form of the applied alternating signal and adjusting the offset of this signal it is possible to obtain uniform optical transmission as the angle of incidence of the light varies. In fact, as clearly shown in Figure 4, a low applied voltage corresponds to a transmission maximum at high angles of incidence; vice versa, for a high applied voltage the maximum shifts to low angles. Accordingly, if the voltage is varied between these two values, at every angle there is an average transmission, if the film is viewed for rather long times with respect to the inverse of the frequency of the voltage.

This average, as a consequence of the behavior of the curves of Figure 4 (maximums at different angles for different applied voltages), can be made the same at all angles of incidence by appropriately choosing the wave form of the applied voltage. Of course, the choice of the frequency of this voltage is also important; in fact it must be low enough to allow re-orientation of the liquid crystal molecules but also high enough to allow averaged transmission in times which are shorter than the perception times of the human eye, which are on the order of one tenth of a second. In this case, light transmission is uniform at the various angles of incidence. The shape of the driving voltage of the PDLC film required to make transmission as constant as possible can be easily calculated on the basis of experimental data such as those of Figure 4, using a computing program.

The following examples, enclosed merely by way of non-limitative illustration, use the following materials:

### 1 - Resins

- PMMA = Polymethyl methacrylate (commercial thermoplastic polymer)

- PVFM = Polyvinyl formamide (commercial thermoplastic polymer)

### 2 - Liquid crystals

- E7 = Nematic Eutectic Mix by BDH
- E49 = Nematic Eutectic Mix by BDH
- TL202 = Nematic Eutectic Mix by BDH

### 3 - Spacers

- Micropearls of polystyrene (d = 20 microns) supplied by Polyscience Inc.

### 4 - Conducting media (electrodes)

- Transparent glass plates with conducting layers made of indium and tin oxide (ITO) supplied by Donnelly.

The following values were measured:

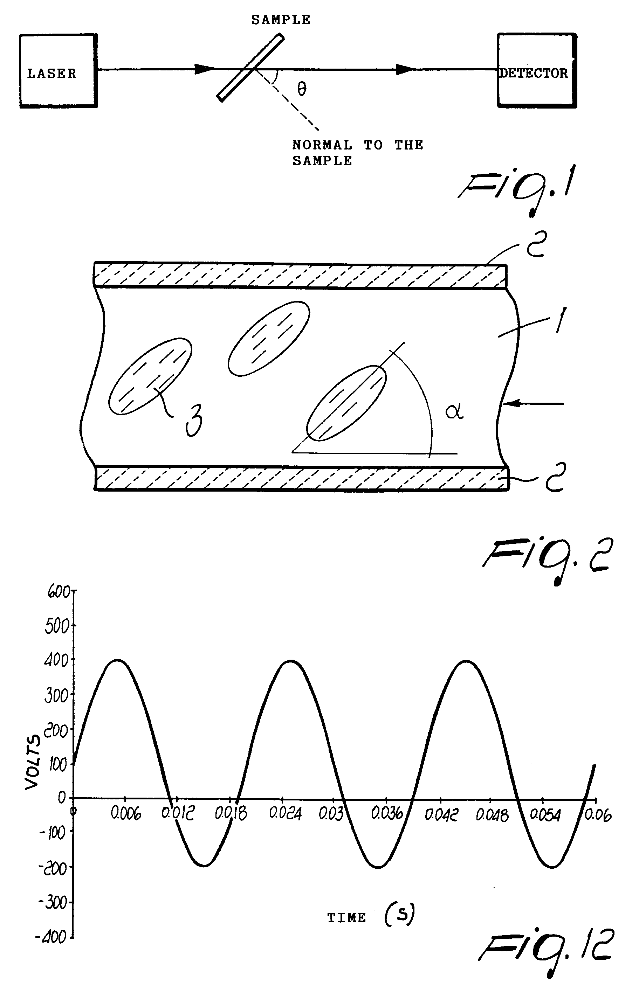

- The intensity of the light transmission is U A (the intensity of transmitted light is expressed in arbitrary units, which correspond to the microamperes of the current the photodiode used for measurement).
- The applied voltage is V (peak-to-peak sinusoidal voltage. When use of a nonsinusoidal voltage is indicated, its wave form is specified on a case-by-case basis).
- The angle of incidence of the light is defined as in Figure 1.

### EXAMPLE 1

A PDLC sample was prepared by using polymethyl methacrylate (PMMA) as polymer and phase E49 by BDH as liquid crystal, and using the TIPS (Thermal Induced Phase Separation) procedure, described for example in Wu B.G., West J.L., Doane J.W., J Appln Phys, 62, 3925 (1987). A mixture composed of equal parts by weight of PMMA and E49 was heated to approximately 150°C by using a stream of air. The viscosity of the polymer decreased rapidly and the mixture was agitated vigorously. 0.5% of 20-micrometer polystyrene spacers by Polyscience was then added, continuing agitation with heat for approximately 3 minutes. The resulting uniform mix, which was rather fluid, was then poured onto the conducting part of a conducting glass medium supplied by Donnelly and placed on a heating plate at approximately 120°C. After waiting for approximately 2 minutes for any air bubbles to disappear, a second conducting glass medium of the same type, preheated to the same temperature, was placed over the mix, taking care not to form air bubbles, and a pressure was applied to it which made excess material leave the region between the two glass plates. The unit was then left to cool to 20°C. The final thickness of 24 micrometers was measured using a micrometer gauge. An alternating voltage of 1 kHz was applied to this film and its intensity was increased until maximum transparency was produced. The resulting curve of transmission as a function of the angle of incidence of the light (see Figure 1) is shown in Figure 3. The same film was then heated to approximately 50°C and subjected to a shearing process by using a micrometric-pitch vise in order to deform the microdroplets from the spherical state to the elongated one so that the microdroplets assumed an angle of approximately 30 degrees with respect to the film plane (see Figure 2). Before being removed from the vise, the film was cooled to 20°C.

Alternating voltages of 1 kHz at various intensities were applied to the film prepared as described above; optical transmission at various angles of incidence was measured. The results, plotted in Figure 4, show that the maximum of transmission shifts from -70 degrees in the absence of applied field to gradually lower values.

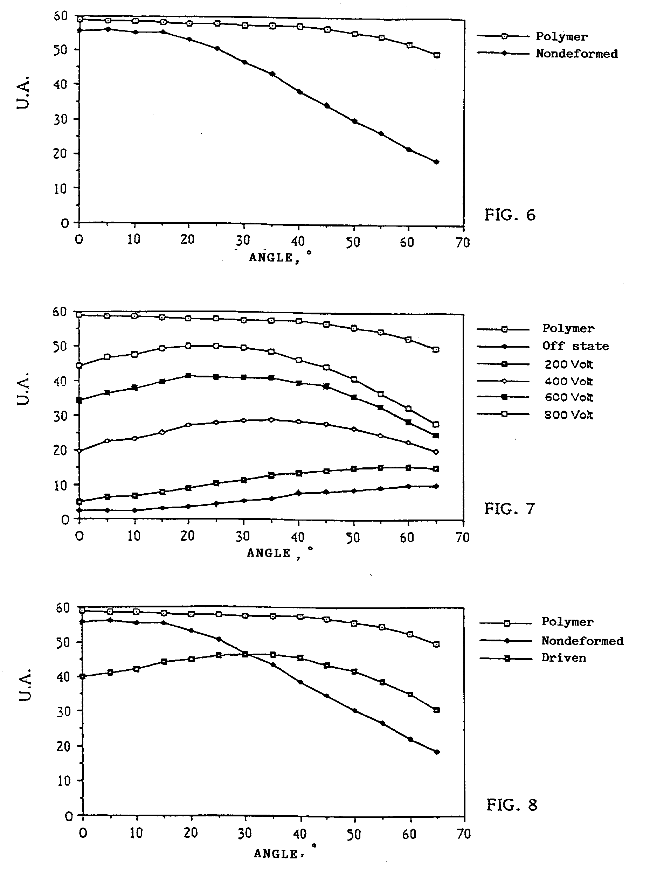

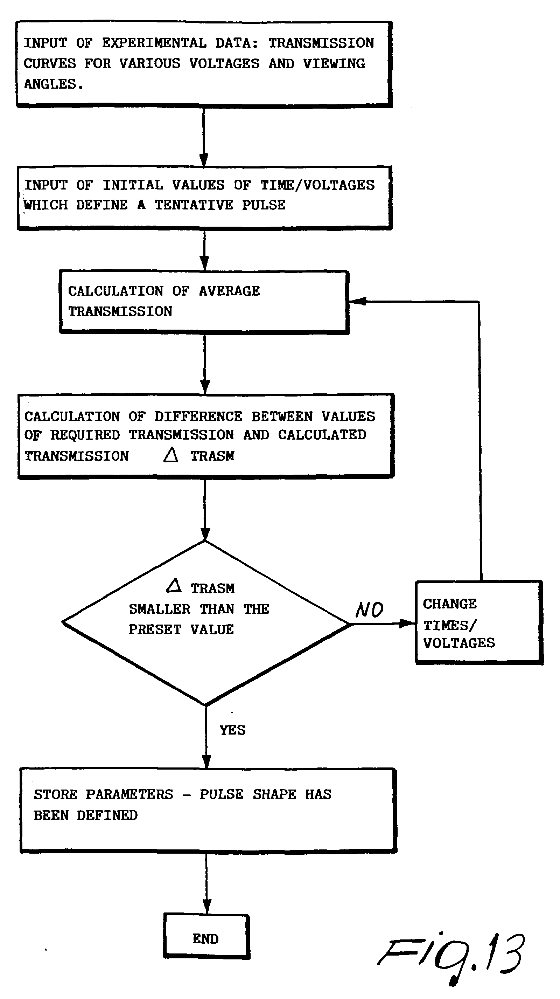

Figure 5, which relates to the same sample with elongated microdroplets, allows to compare the light transmission of the nondeformed film to which a simple 1-kHz alternating voltage is applied with the light transmission of the deformed film to which a 600-V, 50-Hz alternating voltage is applied together with a bias of 100 volts DC, shown in Figure 12. The above described method is one of the simplest for "shaping" a voltage so as to utilize the characteristics of films with elongated microdroplets, as described above. It is evident that for deformed microdroplets and a shaped voltage, the behavior of the optical transmission of the sample as the angle of incidence varies, in the interval between 0 and 60 degrees, varies within 5%, whilst overall transmission remains above 75% with respect to the transmission of a film as thick as the polymeric material alone, also shown in Figure 5. In the case of the sample with nondeformed droplets, light transmission instead decreases significantly for angles of inclination of more than 30 degrees.

EXAMPLE 2

This example is similar to the preceding one, the only difference being that this time the liquid crystal used is TL202 by BDH. Figure 6 shows the dependence of light transmission through a film with spherical droplets on the angle of incidence of the light and, for comparison, transmission through a film of the PMMA polymer alone between similar substrata. Figure 7 shows the results of the same measurement on the sample with elongated microdroplets for various applied voltages. Figure 8 instead illustrates the comparison between conventional PDLC with spherical droplets and PDLC with deformed droplets, to which a voltage similar to that of the previous example is applied.

EXAMPLE 3

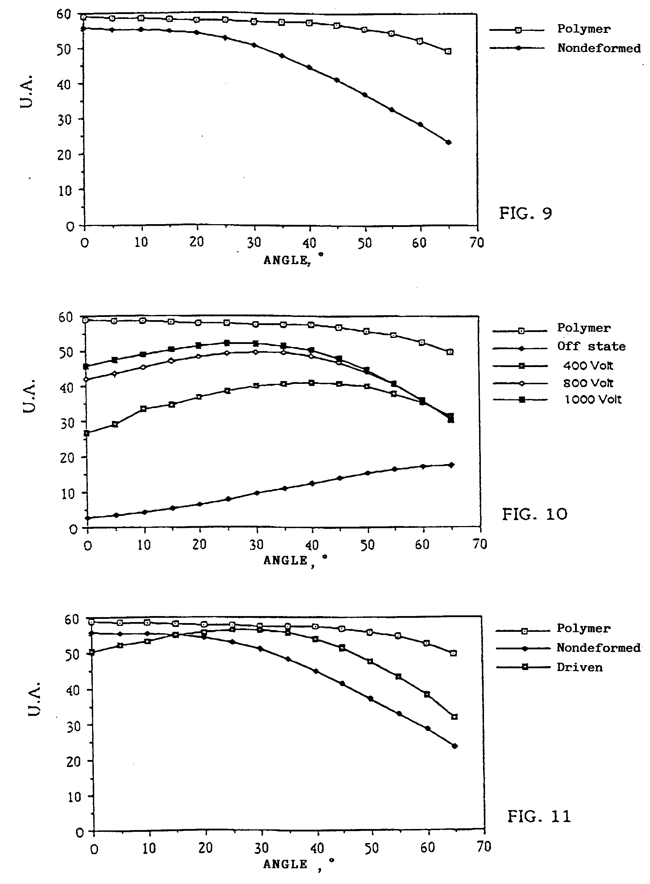

Samples obtained by using the same method of preparation as in the previous examples were studied, using polyvinyl formamide (PVFM) in combination with mesophase E7 by BDH. A sample with nondeformed droplets has a relatively constant optical transmission for angles of incidence up to approximately 25 degrees, as shown in Figure 9. After deformation, and for applied sinusoidal voltages having different intensities, transmission is shown in Figure 10, whilst the comparison between conventional PDLC and PDLC with elongated droplets and driven as in the two previous examples is shown in Figure 11.

Figure 3, in particular, plots the variation of light transmission through a film of PMMA and E49 (1:1) as a function of the angle of inclination of the sample (see Figure 1). The sample is 24 micrometers thick and is placed between two conducting glass plates, on which a sinusoidal voltage of 500 V at 1 kHz is applied. The transmission, in the same conditions, of a film constituted by the PMMA polymer alone is shown for comparison.

Figure 4, in particular, plots the variation of light transmission through a film of PMMA and E49 (1:1), stretched with $\alpha$ = 30 degrees (see Figure 2), as a function of the angle of inclination of the sample. The sample is 24 micrometers thick and is placed between two conducting glass plates, to which a 1-kHz variable-intensity sinusoidal voltage is applied. The transmission, in the same conditions, of a film constituted by the PMMA polymer alone is shown for comparison.

Figure 5, in particular, plots the variation of light transmission as a function of the angle of inclination of the sample in three different cases: a) a film constituted by the PMMA polymer alone, between two conducting glass plates; b) a 24-micrometer film of PMMA and E49 (1:1) between conducting glass plates to which a voltage of 500 V at 1 kHz is applied; c) a 24-micrometer film of PMMA and E49 (1:1), stretched with $\alpha$ = 30 degrees, to which an alternating voltage of 600 V at 50 Hz is applied together with a 100-V DC bias.

Figure 6, in particular, plots the variation of light transmission through a film of PPMA and TL202 (1:1) as a function of the angle of inclination of the sample (see Figure 1). The sample is 27 micrometers thick and is placed between two conducting glass plates, to which a 500-V 1-kHz voltage is applied. The transmission, in the same conditions, of a film constituted by the PMMA polymer alone is shown for comparison.

Figure 7, in particular, plots the variation of light transmission through a film of PMMA and TL202 (1:1), stretched with $\alpha$ = 30 degrees (see Figure 2) as a function of the angle of inclination of the sample. The sample is 27 micrometers thick and is placed between two conducting glass plates, to which a 1-kHz variable-intensity sinusoidal voltage is applied. Transmission, in the same conditions, of a film constituted by the PMMA polymer alone is shown for comparison.

Figure 8, in particular, plots the variation of light transmission as a function of the angle of inclination of the sample in three different cases: a) a film constituted by the PMMA polymer alone between two conducting glass plates; b) a 27-micrometer film of PMMA and 202 (1:1) between conducting glass plates, to which a 500-V 1-kHz voltage is applied; c) a 27-micrometer film of PMMA and 202 (1:1) stretched with $\alpha$ = 30 degrees to which an alternating 50-Hz 600-V voltage is applied together with a 100-V DC bias.

Figure 9, in particular, plots the variation of light transmission through a film of PVFM and E7 (1:1) as a function of the angle of inclination of the sample (see Figure 1). The sample is 28 micrometers thick and is placed between two conducting glass plates, to which a 500-V 1-kHz sinusoidal voltage is applied. The transmission, in the same conditions, of a film constituted by the PVFM polymer alone is shown for comparison.

Figure 10, in particular, plots the variation of light transmission through a film of PVFM and E7 (1:1) stretched with $\alpha$ = 30 degrees (see Figure 2) as a function of the angle of inclination of the sample. The same is 28 micrometers thick and is placed between two conducting glass plates to which a variable-intensity 1-kHz sinusoidal voltage is applied. The transmission, in the same conditions, of a film constituted by the PMMA polymer alone is shown for comparison.

Figure 11, in particular, plots the variation of light transmission as a function of the angle of inclination of the sample in three different cases: a) a film constituted by the PVFM polymer alone, between two conducting glass plates; b) a 28-micrometer film of PVFM and E7 (1:1) between conducting glass plates, to which a 500-V 1-kHz voltage is applied; c) a 28-micrometer film of PVFM and E7 (1:1) stretched with $\alpha$ = 30 degrees, to which an 800-V 50-Hz alternating voltage is applied together with a 100-V DC bias.

**Claims**

1. PDLC film device having reduced haze, comprising microdroplets of a thermotropic liquid crystal dispersed in a polymeric matrix, said microdroplets having an elongated shape and being all orientated in the same direction, said device comprising a means for generating an electrical field in which the frequency is between 10 and 1000 Hz and the voltage is between +500 and -500 V, and which is defined by the formula:

$$T(\theta)=\Sigma_i P_i T(\theta, V_i) = C$$

where C is a constant, $P_i$ are the weights of each transmission curve $T(\theta, V_i)$, $V_i$ are the voltages, $T(\theta)$ is the transmission, and $\theta$ is the angle of incidence.

2. Device according to claim 1, wherein said orientation direction is inclined by an angle a other than zero with respect to the plane of said film.

3. Method for preparing a PDLC film device with reduced haze, comprising microdroplets of a thermotropic liquid crystal dispersed in a polymeric matrix, said microdroplets having an elongated shape and being all orientated in the same direction, said device comprising a means for generating an electrical field which has a frequency between 10 and 1000 Hz and a voltage between +500 and -500 V, said method allowing to identify said voltage and comprising the following steps:

   a) preparing experimental transmission curves for various voltages and various viewing angles,
   b) setting initial time/voltage values which define a tentative pulse,
   c) calculating average transmission,
   d) calculating the difference between required transmission values and calculated values, and
   e) verifying the acceptability of the difference.

4. Method according to at least one of the preceding claims, comprising the following additional step: The method preferably comprises the following additional step:

   f1) storing the wave form parameters if said verification yields a positive result.

5. Method according to at least one of the preceding claims, comprising the following additional step:

   f) changing the times/voltages if said verification yields a negative result.

6. Any new characteristic or new combination of characteristics described here.

SAMPLE

NORMAL TO THE
SAMPLE

LASER → θ → DETECTOR

*Fig.1*

*Fig.2*

*Fig.12*

FIG. 3

FIG. 4

FIG. 5

FIG. 6

FIG. 7

FIG. 8

FIG. 9

FIG. 10

FIG. 11

INPUT OF EXPERIMENTAL DATA: TRANSMISSION
CURVES FOR VARIOUS VOLTAGES AND VIEWING
ANGLES.

↓

INPUT OF INITIAL VALUES OF TIME/VOLTAGES
WHICH DEFINE A TENTATIVE PULSE

↓

CALCULATION OF AVERAGE
TRANSMISSION

↓

CALCULATION OF DIFFERENCE BETWEEN VALUES
OF REQUIRED TRANSMISSION AND CALCULATED
TRANSMISSION     $\triangle$ TRASM

↓

$\triangle$ TRASM
SMALLER THAN THE
PRESET VALUE    —NO→    CHANGE
TIMES/
VOLTAGES

YES

↓

STORE PARAMETERS - PULSE SHAPE HAS
BEEN DEFINED

↓

END

Fig.13

**European Patent Office**

# EUROPEAN SEARCH REPORT

Application Number

EP 97 10 3704

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 409 442 A (TALIQ CORP) 23 January 1991 * the whole document * | 1,2 | G02F1/1333 |
| A | | 3-6 | |
| | --- | | |
| X | US 5 240 636 A (DOANE JOSEPH W ET AL) 31 August 1993 | 1,2 | |
| A | * the whole document * | 3-6 | |
| | --- | | |
| D,A | JOURNAL OF APPLIED PHYSICS, vol. 62, no. 9, 1 November 1987, pages 3925-3931, XP000021809 BAO-GANG WU ET AL: "ANGULAR DISCRIMINATION OF LIGHT TRANSMISSION THROUGH POLYMER-DISPERSED LIQUID-CRYSTAL FILMS" | 1-6 | |
| | ----- | | |
| | | | **TECHNICAL FIELDS SEARCHED (Int.Cl.6)** |
| | | | G02F |

The present search report has been drawn up for all claims

| Place of search | Date of completion of the search | Examiner |
|---|---|---|
| MUNICH | 28 July 1997 | Maaswinkel, A |

EPO FORM 1503 03.82 (P04C01)